# EUROPÄISCHE PATENTSCHRIFT

(11) **EP 0 925 337 B1**
(45) Veröffentlichungstag und Bekanntmachung des Hinweises auf die Patenterteilung: **23.01.2002**
(21) Anmeldenummer: 97919030.3
(22) Anmeldetag: 04.09.1997
(51) Int. Cl.: C09J 131/04

(54) **KLEBDISPERSION ZUM GUMMIEREN IM KUVERTIERANLAGEN**
ADHESIVE DISPERSION FOR GUMMING IN ENVELOPE MACHINES
DISPERSION COLLANTE POUR LE GOMMAGE DANS DES MACHINES A METTRE SOUS ENVELOPPE

(30) Priorität: 10.09.1996 DE 19636590
(43) Veröffentlichungstag der Anmeldung: 30.06.1999
(73) Patentinhaber: Henkel Kommanditgesellschaft auf Aktien, 40589 Düsseldorf-Holthausen (DE)
(72) Erfinder: BÜSCHING, Hartmut, D-31604 Raddestorf (DE); FRIEDRICH, Klaus, D-32457 Porta Westfalica (DE); BUXHOFER, Horst, D-40699 Erkrath (DE); ABRAHAMS, Ethel, D-41748 Viersen (DE); GOSSEN, Ralf, D-47239 Duisburg (DE); SCHAPER, Werner, D-32457 Minden (DE)
(86) Internationale Anmeldenummer: EP9704801
(87) Internationale Veröffentlichungsnummer: WO9811171

(56) Entgegenhaltungen:
- EP-A- 0 169 501
- EP-A- 0 705 896
- BE-A- 574 381
- DE-A- 3 323 851
- GB-A- 1 133 076
- SU-A- 1 315 461
- US-A- 3 275 589

## Beschreibung

Die Erfindung betrifft einen Klebstoff auf der Basis einer mit Schutzkolloiden stabilisierten Polyvinylacetat-Dispersion, ihre Herstellung und Verwendung.

Es gibt zahlreiche Veröffentlichungen zur Herstellung von Polyvinylacetat-Dispersionen und deren Verwendung. In der DE 33 23 851 wird eine wäßrige Polymer-Dispersion aus Vinylestern und gegebenenfalls 50 Gew.-% an weiteren ethylenisch ungesättigten Verbindungen in Gegenwart von Stärkeethern als Schutzkolloid beschrieben. Darüber hinaus können noch weitere Schutzkolloide zugesetzt werden wie z.B. Polyvinylalkohol. Allerdings werden diese Hilfsstoffe, sofern überhaupt, vorzugsweise erst der fertigen Dispersion nach Ende der Polymerisation zugesetzt, da sie sonst vielfach in unerwünschter Weise in die Polymerisation eingreifen oder die Produkte in unerwünschter Weise modifizieren können. Diese bekannten Dispersionen werden als solche zur Herstellung von Klebstoffen, insbesondere für Papier und Folien, sowie zur wasserfesten Verleimung von Holz verwendet. Zweckmäßigerweise werden sie jedoch zur Herstellung von redispergierbaren Kunststoff-Pulvern zur Herstellung von Tapeten-Kleister verwendet. Von einer Verwendung als Gummier-Klebstoff ist keine Rede.

Unter Gummierung wird die Beschichtung eines Trägermaterials mit einem wasserreaktivierbaren Klebstoff verstanden. Das Trägermaterial ist in der Regel ein wasseraufsaugendes Produkt, insbesondere aus Papier oder Pappe. Es kann z.B. als Briefmarke, als Briefumschlag, als Etikett, als Klebstoffstreifen usw. verwendet werden. Auf das Trägermaterial wird der Gummier-Klebstoff in flüssiger Form appliziert und dann getrocknet. Dabei verliert er seine Klebrigkeit. Erst beim Anfeuchten mit Wasser wird er wieder klebrig. Die Gummier-Klebstoffe basieren üblicherweise auf z.B. Glutin oder Stärkederivaten (Dextrin). Aber auch vollsynthetische Polymere sind brauchbar, z.B. Polyvinylalkohol und Polyvinylacetat.

Die Konfektionierung von Gummier-Klebstoffen auf der Basis einer Polyvinylacetat-Dispersion geht aus der DD 275 069 hervor. Demnach muß man zu der Polyvinylacetat-Dispersion eine wäßrige Lösung von Polyvinylalkohol geben sowie vorzugsweise auch noch Glycerin. Der wiederanfeuchtbare Klebstoff hat folgende Massen-Zusammensetzung: 50 bis 60 % einer 20%igen Polyvinylalkohollösung, 40 bis 50 % einer Polyvinylacetat-Dispersion und 0 bis 5 % Glycerin. Das Glycerin dient als Weichmacher und der Polyvinylalkohol verbessert die Reaktivierung durch Feuchtigkeit. Die Herstellung eines Gummier-Klebstoffes ist also aufwendig, da die Hilfsstoffe in einem separaten Verfahrensschritt zugesetzt werden. Darüber hinaus werden zwar einzelne, aber nicht alle Anforderungen an einen Gummierklebstoff im gewünschten Ausmaß erfüllt. Dies gilt insbesondere für die Planlage des gummierten Papieres, die Blockfestigkeit und die Abbindezeit nach der Wiederbefeuchtung.

Die erfindungsgemäße Aufgabe besteht demnach darin, einen Gummier-Klebstoff bereitzustellen, der einfach herzustellen ist, der nach dem Auftrag seiner Lösung schneller trocknet und beim Anfeuchten schneller wieder klebrig wird, jedoch weitgehend blockfest ist. Verallgemeinert besteht die Aufgabe darin, einen Gummier-Klebstoff mit verbesserten Herstellungs-, Anwendungs- und Gebrauchseigenschaften bereitzustellen.

Die Lösung dieser Aufgabe ist den Patentansprüchen zu entnehmen. Sie beruht im wesentlichen darauf, daß zur Herstellung des Gummier-Klebstoffes die Polyvinylacetat-Dispersion nicht mit einer wäßrigen Polymerlösung versetzt wird, insbesondere nicht mit einer Lösung von Polyvinylalkohol und Stärkeether, sondern daß die Polyvinylacetat-Dispersion unter besonderen Bedingungen hergestellt wird, wobei die Art und die Menge des Schutzkolloides von besonderer Bedeutung ist. Dadurch ergibt sich ein Gummier-Klebstoff auf der Basis einer stabilisierten Polyvinylacetat-Dispersion, die gekennzeichnet ist durch folgende Anteile:
A) 35 bis 45 Gew.-%, bezogen auf den Klebstoff insgesamt, eines Copolymerisates aus Vinylacetat und 25 bis 50 Gew.-%, bezogen auf die Monomeren insgesamt, mindestens eines Alkyl-Esters der Fumar-, Malein-, Acryl- und/oder Methacrylsäure, wobei die Alkyl-Reste verzweigt oder unverzweigt sein können und 4 bis 18, insbesondere 4 bis 8 C-Atome enthalten sollen,
B) mindestens ein Schutzkolloid, und zwar
   a) 15 bis 30, insbesondere 15 bis 25 Gew.-%, bezogen auf den Klebstoff insgesamt, eines nichtionischen Stärkeethers und
   b) 0 bis 12, irisbesondere 8 bis 12 und vor allem 10,5 bis 12 Gew.-%, bezogen auf den Gummier-Klebstoff insgesamt, eines Polyvinylalkoholes,
   mit einem Feststoffgehalt von 50 bis 60 Gew.-%, bezogen auf den Gummier-Klebstoff insgesamt.

Als "nichtionische Stärkeether" kommen insbesondere Hydroxyalkyletherstärken in Frage, z.B. Hydroxyethyl-, Hydroxypropyl- und Hydroxybutyletherstärken. Die Alkyl-Gruppen enthalten 2 bis 8, insbesondere 2 bis 4 C-Atome.
Als Ausgangsprodukte für die genannten Stärken lassen sich sowohl abgebaute, z.B. durch saure Hydrolyse abgebaute, als auch native Stärken einsetzen. Bei der Wahl dieser Ausgangsprodukte brauchen im allgemeinen keine besonderen Anforderungen beachtet zu werden. So können praktisch alle Stärken pflanzlicher Herkunft eingesetzt werden, z.B. solche aus Mais, Weizen, Kartoffeln, Tapioka, Reis, Sago und Hirse.
Die Hydroxyalkylierung ist an sich ein bekanntes Verfahren und brauchen deshalb hier nicht eingehender beschrieben zu werden. Auch die Substitutionsgrade sind nicht entscheidend für die Erfolge des Verfahrens, so genügen vielfach solche bis ca. 2. Viele der einsetzbaren Stärkederivate gibt es als Handelsprodukte auf dem Markt.
Vorzugsweise wird der nichtionische Stärkeether als einziges Schutzkolloid eingesetzt, und zwar in einer Menge von 15 bis 30 Gew.-%, insbesondere 15 bis 25 Gew.-%.

Es ist bekannt, Polyvinylalkohol in einer Menge von ca. 2 bis 5 Gew.-% als Schutzkolloid während der Polymerisation von Polyvinylacetat einzusetzen. Erfindungsgemäß sollte diese Konzentration erhöht werden, und zwar trotz des Vorurteils, dadurch daß Polyvinylacetat in seinen Eigenschaften negativ zu beeinflussen. Überraschenderweise wurde festgestellt, daß bei einem Zusatz von 8 bis 12 Gew.-% an Polyvinylalkohol während der Polymerisation die Reaktivierung nach Anfeuchtung der Gummierung genauso schnell erfolgt wie bei einem nachträglichen Zusatz von mehr als 10 Gew.-% an Polyvinylalkohol zu der fertigen Polyvinylacetat-Dispersion.
Der Gehalt an Polyvinylalkohol in der erfindungsgemäß zu verwendenden Natriumacetat-Dispersion beträgt also 0 bis 12 Gew.-%, bezogen auf den Gummier-Klebstoff insgesamt, vorzugsweise 8 bis 12 Gew.-% und insbesondere 10,5 bis 12 Gew.-%. Während der Polymerisation kann der Anteil größer sein, da nach der Polymerisation die endgültigen erforderlichen Spezifikationen durch Zusatz von Wasser erfüllt werden.

Erfindungsgemäß ist das Polyvinylacetat ein Copolymerisat aus Vinylacetat und 25 bis 50 Gew.-%, bezogen auf die Monomeren insgesamt, mindestens eines Esters der Fumar-, Malein-, Acryl- und/oder Methacrylsäure, wobei die Alkylgruppe verzweigt oder unverzweigt sein kann und 4 bis 18, insbesondere 4 bis 8 C-Atome enthalten soll. An bevorzugten Alkylgruppen seien ausdrücklich genannt: Butyl und Ethylhexyl. Bevorzugtes Comonomeres ist ein Alkylester der Maleinsäure.

Die Copolymerisation kann im wesentlichen nach dem in der deutschen Offenlegungsschrift DE 33 23 851 beschriebenen Verfahren erfolgen, wobei der Ansatz so zu gestalten ist, daß ein Feststoffgehalt von 50 bis 60 Gew.-%, insbesondere von 55 bis 60 Gew.-% erhalten wird, bezogen auf die erfindungsgemäß als Gummier-Klebstoff zu verwendende Dispersion insgesamt. Insbesondere kann das Polyvinylacetat nach Verfahren der Suspensions- oder Emulsions-Polymerisation hergestellt werden, wobei letzteres bevorzugt ist. Die einzelnen Verfahrensbedingungen hierzu sind allgemein bekannt. Auf die DE 33 23 851 wird ausdrücklich Bezug genommen:

Das bekannte Verfahren zur Herstellung wäßriger Polymerdispersionen besteht insbesondere in einer Polymerisation von Vinylestern zusammen mit 25 bis 50 Gew.-%, bezogen auf das Gesamtgewicht der Monomeren, weiterer ethylenisch ungesättigter Verbindungen mittels freie Radikale liefernder, zumindest teilweise wasserlöslicher Initiatoren bei Reaktionstemperaturen von +10 bis +100°C in Gegenwart von hydroxyalkylierter Stärke und/oder des weiteren Stabilisators Polyvinylalkohol unter Vorlage von höchstens einem Drittel der Gesamtmonomeren und Dosierung des Restes der Monomeren während der Polymerisation.

Die oben beschriebene Polyvinylacetat-Dispersion kann als . solche erfindungsgemäß als Gummier-Klebstoff verwendet werden. Es können aber auch noch Hilfsstoffe zugesetzt werden, um spezielle Anforderungen zu erfüllen, z.B. Farbstoffe, Geruchsstoffe, Biozide usw. Da sie nur fakultativ im Klebstoff enthalten sind, werden sie bei der Gewichtsangabe "bezogen auf den Klebstoff insgesamt" nicht berücksichtigt.

Ein Zusatz einer wäßrigen Polymerlösung von z.B. Polyvinylalkohol oder Dextrin, um so die Aktivierbarkeit nach der Befeuchtung zu verbessern, ist nicht notwendig. Sie ist auch nicht zweckmäßig.

Der erfindungsgemäße Gummier-Klebstoff zeichnet sich durch eine schnelle Trocknung und durch ein schnelles Aktivieren nach der Befeuchtung sowie durch eine sehr intensive Verklebung gegenüber den bekannten Gummier-Klebstoffen aus. Besonders überraschend ist, daß sie dennoch einen hoch glänzenden Film ergeben, der eine gute Blockfestigkeit hat. Nicht zuletzt ist auch die einfachere Herstellung hervorzuheben, da z.B. Polyvinylalkohol nur einmal zugesetzt werden muß.

Die Erfindung wird nun anhand von Beispielen im einzelnen erläutert:
A) Herstellung der Polyvinylacetat-Dispersion
a) Stärkeether als Schutzkolloid
In einem Reaktionsgefäß, das mit Rührer, Thermometer, zwei Dosiergefäßen sowie einem Rückflußkühler versehen ist, werden in 26,275 kg entsalztem Wasser ein pH-Puffer, 22,5 kg einer modifizierten Kartoffelstärke (Hydroxypropyl-Ether) und 0,05 kg eines handelsüblichen Entschäumers bei Temperaturen > 80 °C gelöst. Separat wird bei Raumtemperatur eine Lösung aus 10 kg entsalztem Wassr und 0,5 kg K₂S₂O₈ hergestellt. Diese Lösung wird in das Dosiergefäß 1 gegeben. Im Dosiergefäß 2 wird bei Raumtemperatur eine Mischung aus 24,26 kg Vinylacetat und 16,165 kg Maleinsäuredibutylester bereitgestellt. Der Polymerisationsstart erfolgt bei einer Temperatur > 65 °C durch parallele Dosierung der Komponenten aus den Dosiergefäßen 1 und 2 in das Reaktionsgefäß. Nach Einsetzen der Polymerisation wird die kontinuierliche Dosierung aus 1 und 2 so gesteuert, daß sich eine Reaktionstemperatur von 80 bis 85°C einstellt. Die Reaktionsdauer beträgt ca. 3,5 bis 4 h.
Die Dispersionskenndaten werden im Anschluß an die Polymerisation mit Wasser auf einen Festkörpergehalt von ca. 55 Gew.-% eingestellt.
b) Polyvinylalkohol als Schutzkolloid
In einem Reaktionsgefäß, das mit Rührer, Thermometer, zwei Dosiergefäßen sowie einem Rückflußkühler versehen ist, werden in 659 g entsalztem Wasser ein pH-Puffer, 210 g Polyvinylalkohol (Hydrolysegrad 88 %), 1 g Na₂S₂O₅ und 1 g eines handelsüblichen Entschäumers bei Temperaturen > 85°C gelöst. Separat wird bei Raumtemperatur eine Lösung aus 110 g entsalztem Wasser und 4 g K₂S₂O₈ hergestellt. Diese Lösung wird in das Dosiergefäß 1 gegeben. Im Dosiergefäß 2 wird bei Raumtempertur eine Mischung aus 586,4 g Vinylacetat und 391,6 g Maleinsäuredibutylester bereitgestellt. Der Polymerisationsstart erfolgt bei einer Temperatur > 65 °C durch die parallele Dosierung der Komponenten aus den Dosiergefäßen 1 und 2 in das Reaktionsgefäß.
Nach Einsetzen der Polymerisation wird die kontinuierliche Dosierung aus 1 und 2 so gesteuert, daß sich eine Reaktionstemperatur von 80 bis 85°C einstellt. Die Reaktionsdauer beträgt ca. 3,5 bis 4 h.
Die Dispersionskenndaten werden im Anschluß an die Polymerisation mit Wasser auf einen Festkörpergehalt von ca. 55 Gew.-% eingestellt.
B) Eigenschaften
Die oben beschriebenen Polyvinylacetat-Dispersionen wurden unverändert als Gummier-Klebstoff verwendet. Die Eigenschaften gehen aus der folgenden Tabelle hervor. Sie wurden folgendenmaßen ermittelt:
- Die Viskosität wurde nach Brookfield gemäß ISO 2555 unter folgenden Bedingungen gemessen: RVT, Spindel 4, 20 Umdrehungen/min, 25 °C.
- Der Festkörpergehalt wurde gemäß DIN 53189, Verfashren C, nach 3 Stunden bei 105 °C durch Auswiegen bestimmt.
- Zur Bestimmung der Trocknungszeit wurde ein 40 µm dicker Film einer Dispersion mit einem Festkörpergehalt von 55 Gew.-% mit einer Kastenrakel aufgetragen und bei 23 °C und 55 % relativer Luftfeuchtigkeit bei ruhender Luft getrocknet. Die Trocknungszeit (Naßklebzeit) umfaßt die Zeitspanne vom Auftrag bis zu dem Zeitpunkt, zu dem der Auftrag nicht mehr klebrig ist. Dieser Zeitpunkt wird je nach Unterlagen (Glasscheibe oder Schreibpapier nach DIN 19307, 70 g/m², Verwendungsklasse 4a) unterschiedlich bestimmt:
Beim Glas ist durch gleitendes Überstreichen des Klebstoffilmes mit einem Finger der Trocknungsgrad der Filmoberfläche optisch erkennbar. Bei fortschreitender Trocknung wird die Fingerprüfung in der Zeitfolge von ca. 2 sec durchgeführt, bis optisch keine Beschädigung der Filmoberfläche zu erkennen ist. Diese Zeit in Sekunden gemessen, ergibt die Trocknungszeit eines Klebstoffes auf Glas.
Beim Schreibpapier wird mit einem 4fach über Kreuz gefalteten ZK-Zettel durch Aufdrücken mit dem Daumen jeweils eine Papierecke auf die Filmoberfläche geprüft, nach welcher Zeit in sec der Klebstoff an der Oberfläche getrocknet ist. Der Klebtoff ist trocken, wenn kein rupfender Materialriß am Papier entsteht. Die Zeit in sec gemessen ergibt die Trocknungszeit eines Klebstoffes auf Papier.
Zur Bestimmung der Abbindezeit nach Wiederbefeuchtung wird ein trockener Klebstoff-Film einer 40 µm dicken Schicht einer 55 Gew.-%igen Dispersion auf einem Papier (s. Trocknungszeit) mit Wasser mit Hilfe eines Schwammes angefeuchtet. Der so reaktivierte Klebstoff wird mit Streifen aus Papier (80 g, holzfrei) verklebt. Die Streifen werden alle halbe Sekunde entfernt. Der Zeitpunkt, bei dem beim Entfernen des Papierstreifens ein Faserausriß beobachtet wird, gilt als Ende der Abbindezeit.
- Um die beginnende Verblockung zu bestimmen, werden mit dem Flächenrakel auf Schreibpostpapier 40 µm dicke Filme gezogen und 24 Std. unter Raumbedingungen getrocknet. Man schneidet das Papier nun in Stücke mit der Kantelänge 10 x 10 cm. Auf ein beschichtetes Papier kommt ein ungeschichtetes Papier gleicher Art und Größe. Der erhaltene Stapel sollte aus 15 beschichteten und 15 unbeschichteten Papieren bestehen. Zur Abdeckung werden oben und unten zwei gleich große Stücke Pappe hinzugefügt. Dieser Stapel wird nun im Klimaschrank, der auf 40°C und 70 % relativer Feuchte vorklimatisiert ist, gelagert und mit einem Gewichtsstein von 1 kg belastet. In diesem Klima verbleibt das Prüfmuster 48 Stunden. Zur Kontrolle wird das Gewicht entfernt und die Verblockung überprüft. Von einer beginnenden Verblockung wird dann gesprochen, wenn der Klebstoff-Film klebrig wird.
Ist keine Verblockung feststellbar, werden die Prüfmuster erneut belastet.
Hierzu wird die relative Luftfeuchte um 5 % erhöht und weiter 48 h gelagert.
Diese Verfahrensweise wird bis zur Verblockung durchgeführt.
- Die Auftragsmenge gibt die Menge des Festkörpers pro Fläche an.
- Der pH-Wert wird nach DIN 53785 und ISO 1148 mit einer Glaselektrode bestimmt.
- Zur Glanz-Bestimmung wird ein Flächenrakel der Fa. Erichsen und Schreibpostpapier (70 g/m²; z.B. "Multi Bright" der Fa. Stora Fine Papier, NYMÖLLA, SE) benötigt. Auf einem Bogen Schreibpostpapier, Kantenlänge 20 x 20 cm, wird mit Hilfe eines Ziehrakels ein 40 µm starker, 6 cm breiter Klebstoffstreifen aufgezogen. Es ist darauf zu achten, daß der Klebstoffstreifen in Papierlaufrichtung und ohne Unterbrechung aufgezogen wird. Nach Trocknung des Klebstoff-Filmes (ca. 15 min) wird eine Glanzbeurteilung durchgeführt. Man unterscheidet:

| | Standard |
|---|---|
| sehr hoher Glanz | DH 4094 |
| hoher Glanz | DH 4093 |
| glänzend | DH 4084 |
| matt | A 4520 |

Eine Beurteilung wurde immer gegen einen der angegebenen Standards durchgeführt.
- Zur Bestimmung der Planlage wird auf einem Bogen Schreibpostpapier (80 g/m², holzfrei), Kantenlänge 20 x 20 cm, mit Hilfe eines flächigen Ziehrakels ein 40 µm starker, 6 cm breiter Klebstoffstreifen (55 %ige Dispersion) aufgezogen. Es ist darauf zu achten, daß der Klebstoffstreifen in Papierlaufrichtung und ohne Unterbrechung aufgezogen ist. Getrocknet wird bei 23 °C und 55 % relativer Luftfeuchtigkeit.
Eine Beurteilung der Planlageeigenschaften sollte nach ca. 5 Min., 1 Std. und 24 Std. durchgeführt werden. Zu beachten ist, daß die beschichteten Papiere keiner Zugluft ausgesetzt werden. Zur Beurteilung sollte ebenfalls ein direkter Vergleich zu einem Standardklebstoff stattfinden, da die Planlage sich in Abhängigkeit von Umgebungstemperaturen und Luftfeuchtigkeit ändert. Der Klebstoff-Film sollte plan auf dem Papier liegen. Nach folgenden Kriterien wird unterschieden.:
- plan liegen
- leichtes Schüsseln
- stärkeres Schüsseln
- Rollen
- Wellenbildung
- Faltenbildung

Als Standardklebstoff mit sehr guter Planlage findet Adhesin A 4520 der Fa. Henkel KGaA Verwendung. Bei der Beurteilung der Planlage ist die Umgebungstemperatur und die Luftfeuchtigkeit festzuhalten.

Andere Eigenschaften wie Farbe und beginnende Verblockung lagen in einem guten Bereich.

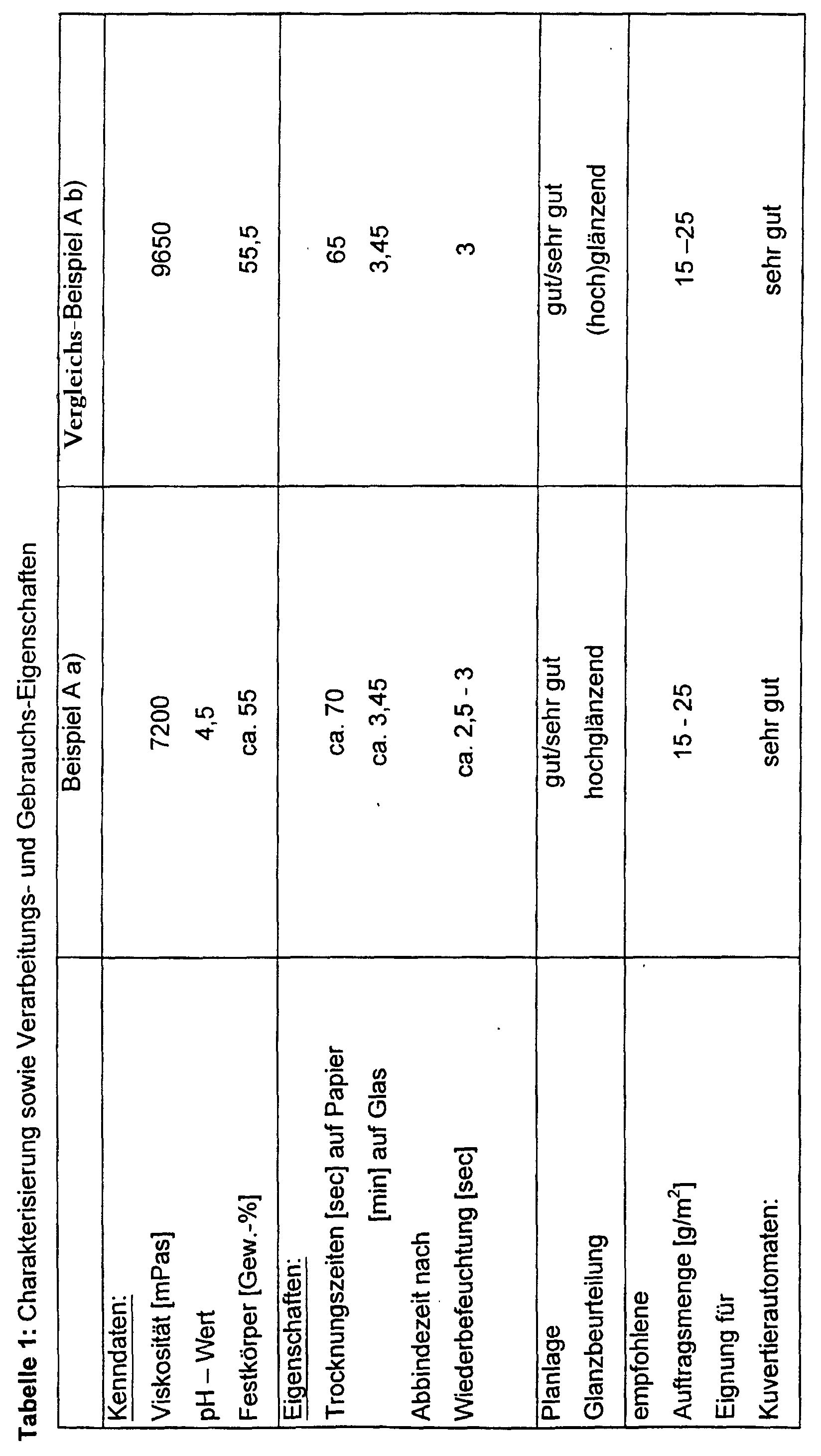

## Patentansprüche

1. Klebstoff auf der Basis einer stabilisierten Polyvinylacetat-Dispersion, **dadurch gekennzeichnet, daß** sie folgende Komponenten enthält:
A) 35 bis 45 Gew.-%, bezogen auf den Klebstoff insgesamt, eines Copolymerisates aus Vinylacetat und 25 bis 50 Gew.-%, bezogen auf die Monomeren insgesamt, mindestens eines Esters der Fumar-, Malein-, Acryl- und/oder Methacrylsäure, wobei die Alkylgruppe verzweigt oder unverzweigt sein kann und 4 bis 18 C-Atome enthalten soll,
B) ein Schutzkolloid, und zwar
a) 15 bis 30 Gew.-%, bezogen auf den Klebstoff insgesamt, mindestens eines nichtionischen Stärkeethers und
b) 0 bis 12 Gew.-%, bezogen auf den Klebstoff insgesamt, an Polyvinylalkohol,
c) wasser, wobei A), B) und C) 100 Gew.-%, bezogen auf den Klebstoff insgesamt, ergeben,
mit einem Festkörpergehalt von 50 bis 60 Gew.-%, bezogen auf den Klebstoff insgesamt.

2. Klebstoff nach Anspruch 1, **dadurch gekennzeichnet, daß** das Comonomere ein Alkylester der Maleinsäure mit 4 bis 8 C-Atomen ist.

3. Klebstoff nach Anspruch 1 oder 2, **dadurch gekennzeichnet, daß** das Schutzkolloid ein nichtionischer Stärkeether aus folgender Gruppe ist: Hydroxyethyl-, Hydroxypropyl- und Hydroxybutyletherstärke.

4. Klebstoff nach den Ansprüchen 1, 2 oder 3, **dadurch gekennzeichnet, daß** der Anteil der nichtionischen Stärkeether 15 bis 25 Gew.-% beträgt, bezogen auf den Klebstoff insgesamt.

5. Klebstoff nach mindestens einem der Ansprüche 1 bis 4, **gekennzeichnet durch** einen Anteil an Polyvinylalkohol im Bereich von 8 bis 12 Gew.-%, insbesondere 10,5 bis 12 Gew.-%, bezogen auf den Klebstoff insgesamt.

6. Klebstoff nach mindestens einem der vorhergehenden Ansprüche, **dadurch gekennzeichnet, daß** der Festkörpergehalt 55 bis 60 Gew.-% beträgt, bezogen auf den Klebstoff insgesamt.

7. Verfahren zur Herstellung des Klebstoffes nach mindestens einem der vorangegangenen Ansprüche, **dadurch gekennzeichnet, daß** die Copolymerisation in Gegenwart des gesamten nichtionischen Stärkeethers und Polyvinylalkohols durchgeführt wird.

8. Verfahren nach Anspruch 7, **dadurch gekennzeichnet, daß** nach der Copolymerisation keine wäßrige Polymerlösung zu der Polyvinylacetatdispersion hinzugefügt wird, insbesondere keiner Lösung von Polyvinylalkohol oder Dextrin.

9. Verwendung des Klebstoffes nach mindestens einem der vorangegangenen Ansprüche zum Gummieren, insbesondere in Kuvertier-Automaten.

## Claims

1. An adhesive based on a stabilized polyvinyl acetate dispersion, **characterized in that** it contains the following components:
A) 35 to 45% by weight, based on the adhesive as a whole, of a copolymer of vinyl acetate and 25 to 50% by weight, based on the monomers as a whole, of at least one ester of fumaric acid, maleic acid, acrylic acid and/or methacrylic add, the alkyl chain optionally being linear or branched and having to contain from 4 to 18 carbon atoms,
B) a protective colloid consisting of
a) 15 to 30% by weight, based on the adhesive as a whole, of at least one nonionic starch ether and
b) 0 to 12% by weight, based on the adhesive as a whole, of polyvinyl alcohol,
C) water, wherein A), B) and C) come to 100% by weight, based on the adhesive as a whole
with a solids content of 50 to 60% by weight, based on the adhesive as a whole.

2. An adhesive as claimed in claim 1, **characterized in that** the comonomer is an alkyl ester of maleic add containing 4 to 8 carbon atoms.

3. An adhesive as claimed in claim 1 or 2, **characterized in that** the protective colloid is a nonionic starch ether from the following group: hydroxyethyl, hydroxypropyl or hydroxybutyl ether starch.

4. An adhesive as claimed in claim 1, 2 or 3, **characterized in that** the nonionic starch ether makes up from 15 to 25% by weight of the adhesive as a whole.

5. An adhesive as claimed in at least one of claims 1 to 4, **characterized by** a percentage polyvinyl alcohol content of 8 to 12% by weight and, more particularly, 10.5 to 12% by weight, based on the adhesive as a whole.

6. An adhesive as claimed in at least one of the preceding claims, **characterized in that** the solids content is from 55 to 60% by weight, based on the adhesive as a whole.

7. A process as for the production of the adhesive claimed in at least one of the preceding claims, **characterized in that** the copolymerization is carried out in the presence of the entire nonionic starch ether and polyvinyl alcohol.

8. A process as claimed in claim 7, **characterized in that**, on completion of the copolymerization, no aqueous polymer solution and, in particular, no solution of polyvinyl alcohol or dextrin is added to the polyvinyl acetate dispersion.

9. The use of the adhesive claimed in at least one of the preceding claims for gumming, more especially in automatic inserting machines.

## Revendications

1. Colle à base d'une dispersion stabilisée de polyacétate de vinyle, qui est **caractérisée en ce qu'**elle contient les composants suivants:
A) 35 à 45 % en poids par rapport à la totalité de la colle, d'un copolymère d'acétate de vinyle et de 25 à 50 % en poids par rapport à la totalité des monomères d'au moins un ester alkylique de l'acide fumarique, maléique, acrylique et/ou méthacrylique, les radicaux alkyle pouvant être ramifiés ou non ramifiés et devant comporter 4 à 18, atomes de C,
B) un colloïde protecteur, à savoir
a) 15 à 30 % en poids par rapport à la totalité de la colle d'au moins un éther d'amidon non ionique et
b) 0 à 12 % en poids d'alcool vinylique par rapport à la totalité de la colle,
C) de l'eau, A), B) et C) donnant 100 % en poids par rapport à la totalité de la colle,
avec une concentration en matières solides de 50 à 60 % en poids, par rapport à la totalité de la colle.

2. Colle selon la revendication 1, **caractérisée en ce que** le comonomère est un ester alkylique de l'acide maléique comportant 4 à 8 atomes de C.

3. Colle selon la revendication 1 ou 2, **caractérisée en ce que** le colloïde protecteur est un éther d'amidon non ionique appartenant au groupe suivant: éther hydroxyéthylique, hydroxypropylique et hydroxybutylique d'amidon.

4. Colle selon les revendications 1, 2 ou 3, **caractérisée en ce que** la proportion de l'éther d'amidon non ionique atteint 15 à 25 % en poids par rapport à la totalité de la colle.

5. Colle selon au moins une des revendications 1 à 4, **caractérisée par** une proportion d'alcool polyvinylique comprise dans l'intervalle de 8 à 12 % en poids, en particulier de 10,5 à 12 % en poids par rapport à la totalité de la colle.

6. Colle selon au moins une des revendications qui précèdent, **caractérisée en ce que** la concentration en matières solides atteint 55 à 60 % en poids, par rapport à la totalité de la colle.

7. Procédé de production de la colle selon au moins une des revendications qui précèdent, **caractérisé en ce que** la copolymérisation est opérée en présence de la totalité de l'éther d'amidon non ionique et de l'alcool polyvinylique.

8. Procédé selon la revendication 7, **caractérisé en ce qu'**aucune solution aqueuse de polymères, en particulier aucune solution d'alcool polyvinylique ou de dextrine n'est ajoutée à la dispersion de polyvinyle acétate après la copolymérisation.

9. Utilisation de la colle selon au moins une des revendications qui précèdent pour le gommage, en particulier dans des machines à mettre sous enveloppe.
